# EUROPEAN PATENT SPECIFICATION

(11) **EP 3 560 793 B1**
(45) Date of publication and mention of the grant of the patent: **15.12.2021**
(21) Application number: 19169381.1
(22) Date of filing: 16.04.2019
(51) Int. Cl.: B62B 3/06

(54) **MATERIAL HANDLING VEHICLE**
MATERIALHANDHABUNGSFAHRZEUG
VÉHICULE DE MANUTENTION DE MATÉRIAUX

(30) Priority: 23.04.2018 SE 1850478
(43) Date of publication of application: 30.10.2019
(73) Proprietor: Toyota Material Handling Manufacturing Sweden AB, 595 81 Mjölby (SE)
(72) Inventor: KHUDAIR, Haider, 602 34 Norrköping (SE); KARLSSON, Stefan, 582 48 Linköping (SE)
(74) Representative: Zacco Sweden AB

(56) References cited:
- GB-A- 958 184
- US-A- 3 287 024
- US-A- 5 752 584
- US-A1- 2009 279 994

## Description

### TECHNICAL FIELD

The present disclosure relates to a material handling vehicle according to the appended claims.

### BACKGROUND ART

Generally in material handling situations, in particular order picking in a warehouse, floor conveyors, forklifts, tiller trucks etc., are used. There are numerous advantages with this type of vehicles, they can be arranged to lift heavy goods, they can be easily operated by a trained operator, they are in general not demanding a considerable investment and they are often rugged and have a considerable life expectancy.

In general, a warehouse or a similar facility is crowded as open space may be perceived as a waste compared to valuable goods arranged at shelves and similar within such a facility. Thus, material handling vehicles to be used in such an environment cannot be too large in size as they then may be difficult to operate in aisles and such within such a facility. However, material handling vehicles must still be sturdy and safe to use, and also conform to certain standardized sizes with reference to loading surfaces and tools, to be able to perform their intended operations.

Examples of material handling vehicles are disclosed in GB 958 184 A, US 5 752 584 A and US 2009/279994 A1.

### SUMMARY OF THE INVENTION

Material handling vehicles to be used in a warehouse environment or similar are thus desired to be as compact as possible without compromising their capabilities to perform material handling operations with heavy loads loaded thereon.

Despite prior art there is a need to develop an improved material handling vehicle, which has a compact design without degenerating its intended functions. There is also a need to develop such a material handling vehicle which provides a stable and reliable loading section which may lift, lower and transport object with little to no angular tilt of said objects when operated. An object of the invention is thus to provide an improved material handling vehicle, which has a compact design without degenerating its intended functions. Another object is respectively to provide such a material handling vehicle which provides a stable and reliable loading section which may lift, lower and transport object with little to no angular tilt of said objects when operated.

According to the invention, a material handling vehicle according to claim 1 is provided. Preferred embodiments are defined in the dependent claims. The material handling vehicle comprises a chassis, having at least one steerable wheel arranged thereto, configured to control movement of the vehicle. The vehicle further comprises a load carrying section, protruding horizontally from the chassis and having at least two support wheels arranged at a lower surface of an end portion thereof. Each support wheel is coupled to a hydraulic cylinder, arranged to displace the support wheels vertically relative to the lower surface of the load carrying section. The chassis and the load carrying section are coupled to each other by means of at least one additional vertical hydraulic cylinder, wherein the hydraulic cylinders are coupled to a hydraulic system comprising a hydraulic circuit for hydraulic fluid. The load carrying section is vertically moveable relative the chassis by means of the hydraulic system. The vehicle further comprises a user interface arranged for controlling the steerable wheel and the vertical movement of the load carrying section relative to the chassis. The two hydraulic cylinders coupled to the at least two support wheels are further coupled to the hydraulic system via a first flow divider which regulates hydraulic fluid to be split equally between the said two hydraulic cylinders. Further, a second flow divider is arranged to regulate hydraulic fluid to be split equally between the at least one vertical hydraulic cylinder and the first flow divider.

This has the advantage that a compact material handling vehicle is provided, said vehicle being able to perform lifting and transporting material operations. By means of utilizing hydraulics as lifting means such lifting may be performed for large loads, which are to be lifted, lowered and/or transported around a facility such as a warehouse. Furthermore, by means of coupling the two hydraulic cylinders coupled to the at least two support wheels to the hydraulic system via a first flow divider, the end portion of the load carrying section may be raised and lowered in a precise manner with a lower risk of angular tilt of objects positioned thereon. As the hydraulic cylinders are coupled to a flow divider, they will provide the same lift on both longitudinal sides of the load carrying section, wherein transversal tilt is avoided even if the centre of gravity in not in the middle of the load carrying section. The flow divider alleviates an uneven distribution of hydraulic fluid to said two hydraulic cylinders, which provides a more horizontally stable lifting and lowering mechanic for the vehicle. The first flow divider will thus provide the same amount of flow of hydraulic fluid to both said cylinders, even if they are subjected to different pressures. Even further, by means of arranging a second flow divider to regulate hydraulic fluid to be split equally between the at least one vertical hydraulic cylinder and the first flow divider, the strokes of all said cylinders will be synchronized when operated. This is beneficial as such a synchronization may be utilized so as to minimize deviations from a horizontal alignment of the load carrying section as the flow of hydraulic fluid provided to each cylinder will be known and controlled in a precise manner. By means of this configuration of flow dividers, a very compact hydraulic system may be provided to the vehicle as a lesser number of individual pumps and other hydraulic components are needed to provide the hydraulic functions of said vehicle. Furthermore, by means of feeding hydraulic fluid to the hydraulic cylinders by means of the first and second flow dividers, the hydraulic cylinders are easier to control in a precise synchronized manner. Furthermore, by means of using hydraulics in the disclosed manner, mechanical devices and components may be cut from a more mechanical design of such a vehicle, which in turn provides a more compact and volume efficient vehicle.

According to an aspect, internal cross section areas of the hydraulic cylinders are dimensioned so that a maximum stroke of each hydraulic cylinder takes an equal amount of time to achieve when the hydraulic cylinders are operated.

This has the advantage that the load carrying section will reach its two end positions, that is, at maximum lift and at no lift, simultaneously when used. This furthermore results in that the load carrying section will always be horizontally aligned when at said two positions. This is beneficial when performing material handling operations, as loads which are to be handled in turn also will be horizontally aligned at the load carrying section. This may further be very beneficial as it may be utilized as a means of using cylinders having one stroke length at the end section of the load carrying section, and cylinders having another stroke length between the chassis and the load carrying section. Coupled with the known flow of fluid to each cylinder by means of the first and second flow dividers, the internal cross section areas may be used so as to provide a synchronization to the vertical movement of the load carrying section at the end portion and at the portion where the load carrying section protrudes from the chassis, even if the stroke lengths differ between said two portions.

According to an aspect, the two hydraulic cylinders coupled to the at least two support wheels may be arranged in a horizontal plane, wherein an intermediate linkage device is arranged between said cylinders and their respective support wheels, said linkage device being arranged to translate the stroke of the cylinders to a vertical displacement of the support wheels.

This has the advantage that the load carrying section may be designed having a lesser thickness, which provides a more compact material handling vehicle. The stroke of the hydraulic cylinders may also be aligned with the protrusion of the load carrying section and not extending away from it. This provides a safer environment for the hydraulics as the cylinders are easier to protect from external sources of potential harm in the form of dust, dirt or debris, or getting in mechanical contact with external objects. Even further, this may be utilized in an advantageous manner to compensate for potential different stroke lengths for the hydraulic cylinders arranged at the end portion of the load carrying section and the at least one vertical cylinder. Such a difference in stroke length may thus be counteracted by means of the linkage device being configured to have a ratio between the stroke of the cylinders and the vertical displacement which adjusts for said difference in stroke lengths.

According to an aspect the vehicle may comprise two vertical hydraulic cylinders arranged between the chassis and the load carrying section, said two vertical cylinders being arranged at opposite longitudinal sides of the vehicle.

This has the advantage that lifting of the load carrying section, at the side closest to the chassis, may be performed by means of two such cylinders. This is beneficial as the two cylinders may split the force needed to perform lifting operations, which puts lesser strain on the hydraulics with regards to dimensioning for certain amounts of load. Furthermore, as the two vertical hydraulic cylinders are arranged at opposite longitudinal sides of the vehicle, the load subjected to the cylinders of the vehicle will be more evenly spread out among said cylinders.

According to an aspect, the vehicle may further comprise a mast coupled to a vertically moveable load carrier, which protrudes from the mast and extends parallel above the load carrying section, and wherein the user interface further comprises control means for operational control of the load carrier.

This has the advantage that the vehicle may be used to handle a larger variation of material handling operations, as the load carrier may lift and lower objects and material at a separate height than the load carrying section. This may further be utilized so as to lift and transport a plurality of objects simultaneously, wherein objects may be positioned at both the load carrying section and the load carrier at the same time. This provides a versatile material handling vehicle with a wider range of usages in for example a warehouse.

According to an aspect, the vehicle is a pedestrian controllable tiller truck, and wherein the user interface is a handle protruding from the chassis.

This has the advantage that the vehicle may be easy used for material handling operations relating to transportation of pallets, with or without load thereon, in a warehouse or a similar facility.

According to an aspect, the vehicle may further comprise a drive motor arranged in the chassis, which drive motor is operationally controllable by means of the user interface.

This has the advantage that the vehicle may be used for more operations that are heavy-duty and thus not demand force from an operator using such a vehicle.

According to an aspect, the vehicle may further comprises an operator compartment.

This has the advantage that an operator using the vehicle may travel along with the vehicle in an easy and comfortable manner.

According to an aspect, the user interface may be a remote control for controlling the vehicle.

This has the advantage that the vehicle may be used for a plurality of operations in a convenient manner from a remote position relative to the vehicle.

Additional objectives, advantages and novel features of the invention will be apparent to one skilled in the art from the following details, and through exercising the invention. While the invention is described herein, it should be apparent that the invention is not limited to the specifically described details. One skilled in the art, having access to the teachings herein, will recognize additional applications, modifications and incorporations in other areas, which are within the scope of the invention as defined by the claims.

### BRIEF DESCRIPTION OF THE DRAWINGS

Below is a description of, as examples, embodiments with reference to the enclosed drawings, in which:
Fig. 1a and 1b show a vehicle in a side view, being in different operational states respectively according to an embodiment,
Fig. 2 shows a hydraulic flow schematic of a vehicle according to an embodiment,
Fig. 3 shows a vehicle in a schematic side view according to an embodiment,
Fig. 4 shows a vehicle in a schematic side view according to an embodiment,
Fig. 5 shows a vehicle in a schematic side view according to an embodiment, and
Fig. 6 shows a vehicle in a schematic side view according to an embodiment.

### DETAILED DESCRIPTION OF THE INVENTION

The detailed description with reference to the embodiments depicted are to be viewed as exemplary embodiments comprising a combination of certain features, which features have been described in detail above. It is thus to be understood that additional embodiments may be achieved by combining other features into embodiments not depicted herein. The figures are to be viewed as examples and not mutually exclusive combinations. It should also be noted that all figures shown and described are schematically represented, wherein generic parts of machinery or similar is not depicted for the sake of simplicity.

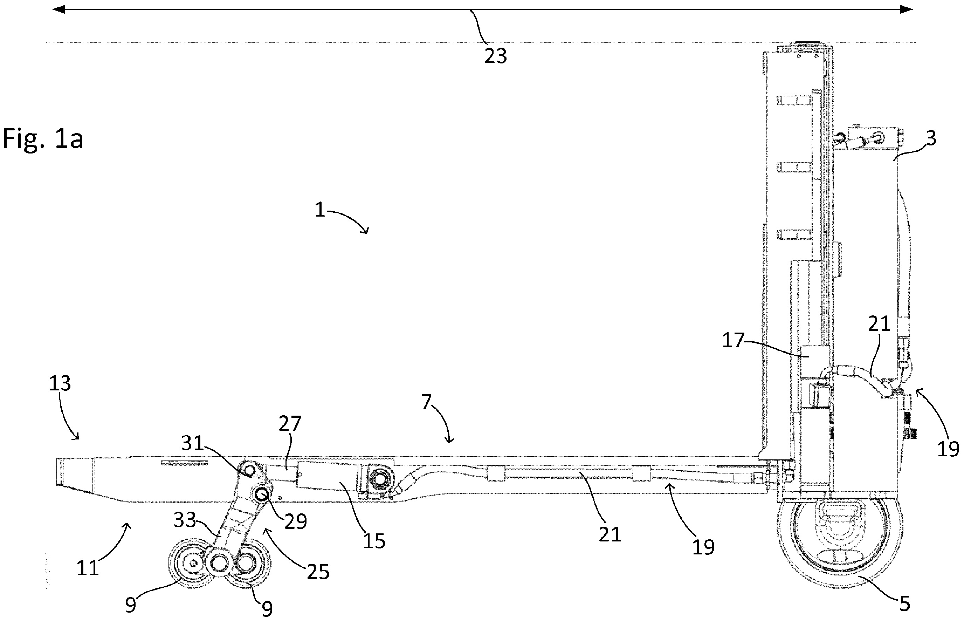

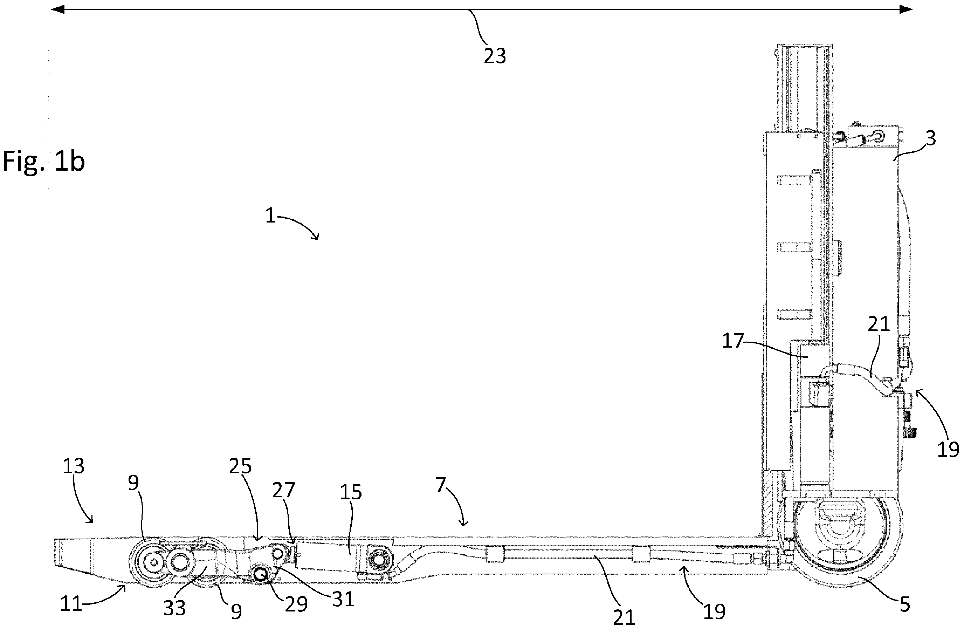

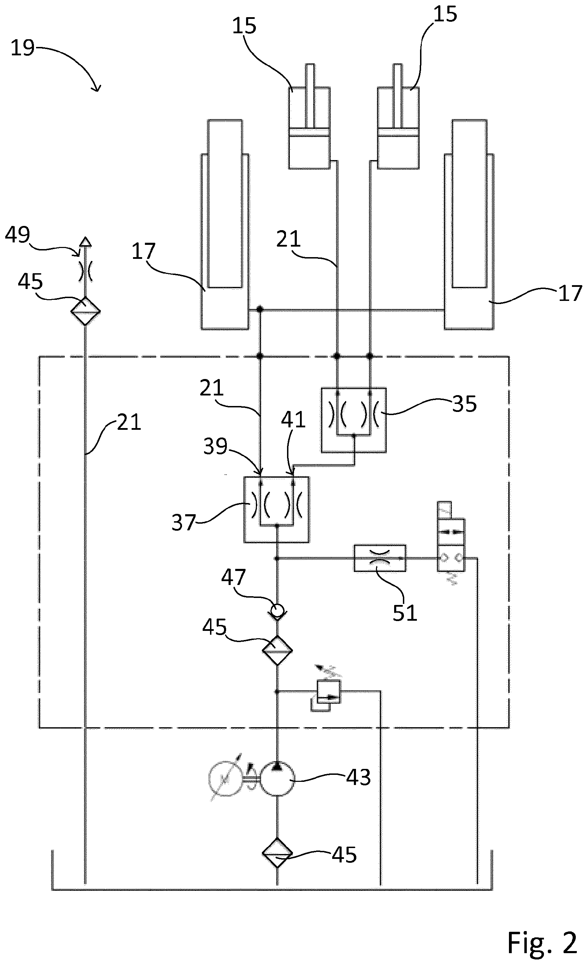

Fig. 1a and 1b show a material handling vehicle 1 in a side view, being in different operational states respectively according to an embodiment. The vehicle depicted in figs. 1a and 1b is a material handling vehicle 1, which comprises a chassis 3, having at least one steerable wheel 5 arranged thereto, configured to control movement of the vehicle 1. The vehicle 1 may further comprise a load carrying section 7, protruding horizontally from the chassis 3 and having at least two support wheels 9 arranged at a lower surface 11 of an end portion 13 thereof. Each support wheel 9 may be coupled to a hydraulic cylinder 15, arranged to displace the support wheels 9 vertically relative to the lower surface 11 of the load carrying section 7. The chassis 3 and the load carrying section 7 may be coupled to each other by means of at least one additional vertical hydraulic cylinder 17, wherein the hydraulic cylinders 15, 17 are coupled to a hydraulic system 19 comprising a hydraulic circuit 21 for hydraulic fluid (the hydraulic system and the hydraulic circuit are not shown in their entireties in figs. 1a and 1b). The load carrying section 7 may be vertically moveable relative the chassis 3 by means of the hydraulic system 19. The vehicle 1 may further comprise a user interface (not shown in figs. 1a and 1b) arranged for controlling the steerable wheel 5 and the vertical movement of the load carrying section 7 relative to the chassis 3. The two hydraulic cylinders 15 coupled to the at least two support wheels 9 may further be coupled to the hydraulic system 19 via a first flow divider which regulates hydraulic fluid to be split equally between the said two hydraulic cylinders 15. Further, a second flow divider may be arranged to regulate hydraulic fluid to be split equally between the at least one vertical hydraulic cylinder and the first flow divider. For a detailed description of the hydraulic system 19, the hydraulic circuit 21, and the first and second flow dividers, see the disclosure with reference to fig. 2.

The load carrying section 7 is as described movable vertically, and is operated and controlled by means of the hydraulic system 19 and its comprised hydraulic cylinders 15, 17. The load carrying section 7 as depicted in fig. 1a is to be perceived as being in a lifted state, wherein the hydraulic cylinders 15, 17 are at their maximum stroke. On the contrary, the load carrying section 7 as depicted in fig. 1b is to be perceived as being in a lowered state, wherein the hydraulic cylinders 15, 17 are at a minimum stroke (or no stroke). The load carrying section 7 as depicted herein, in a side view, does not show any specific transversal shape, but may be perceived as two extending support arms similar to that of a forklift or a tiller truck. Generally however the load carrying section 7 may have any desired shape, and may for example comprise a solid rectangular upper surface so as to provide an increased loading surface thereon.

The vehicle 1 as depicted in figs. 1a and 1b comprises a plurality of hydraulic cylinders 15, 17, which may work in tandem with each other to provide the vertical movement of the load carrying section 7. In the referenced drawings, one vertically arranged hydraulic cylinder 17 is shown therein. The vehicle 1 as depicted may however be perceived as comprising two vertical hydraulic cylinders 17 arranged between the chassis 3 and the load carrying section 7, said two vertical cylinders 17 being arranged at opposite longitudinal sides of the vehicle 1. However, in general any number of such cylinders may be used without deviating from the scope of the disclosure, as long as the dimensioning of the hydraulic cylinders are adapted to conform to the known flow of hydraulic fluid provided to them. The wording "longitudinal sides" are to be perceived as sides of the vehicle, which sides are parallel with a longitudinal extension 23 of the vehicle 1. Thus, the vehicle 1 as depicted in figs. 1a and 1b is to be perceived as viewing one of said longitudinal sides.

The two hydraulic cylinders 15 coupled to the at least two support wheels 9 may be arranged in a horizontal plane, wherein an intermediate linkage device 25 is arranged between said cylinders 15 and their respective support wheels 9, said linkage device 25 being arranged to translate the stroke of the cylinders 15 to a vertical displacement of the support wheels 9. The phrasing "horizontal plane" is to be understood as being essentially horizontal but may deviate from an exactly horizontal alignment by a few degrees, both in general and/or when operated. The linkage device 25 as depicted forces a displaceable piston 27 of each cylinder 15 to move in a slight arching trajectory so as to provide the translation of force, wherein the cylinder 15 thus naturally will deviate from an exact horizontal alignment during such an operation. As is also seen in figs. 1a and 1b, each linkage device 25 is coupled to two support wheels 9. This is merely to be viewed as a design choice, and in general, one, three, or another number of such support wheels 9 may be used.

The linkage device 25 as depicted herein is shown to be able to pivot about a rotational axis 29, and comprises a radially extending first arm member 31 coupled to the piston 27 of the hydraulic cylinder 15, and a radially extending second arm member 33 coupled to the support wheels 9. As is seen herein, the stroke of the piston 27 will push the first arm member 31 in an arching motion over the rotational axis 29, wherein the second arm member 33 will correspondingly be moved downwards in a similar arching motion, which results in the support wheels 9 being vertically displaced from the lower surface 11 of the load carrying section 7. As should be obvious, the individual lengths of the first and second arm members 31, 33 and the relation between said two lengths will provide a mechanical gear ratio between the first and second arm members 31, 33. As the first and second arm members 31, 33 are fixedly coupled to each other and share the same rotational axis 29, the stroke of the piston 27 of the hydraulic cylinder 15 may be smaller than the resulting vertical displacement of the support wheels 9. The lengths of the first and second arm members 31, 33 may thus be chosen differently depending on how large stroke a cylinder 15 may provide, and how high the load carrying section 7 is desired to be able to be moved. It should be noted that in general, other types of linkage devices may also be used to provide a similar function as described herein.

When viewing figs. 1a and 1b, it is seen that the vertical hydraulic cylinder 17 have a larger stroke than the horizontally arranged hydraulic cylinders 15. The provided vertical movement of the load carrying section 7 is however the same, which is in part achieved by means of the linkage device 25 translating the lesser horizontal stroke of the piston 27 to a larger vertical displacement of the support wheels 9, as described above. However, it is desired to provide an as synchronized vertical movement of the load carrying section 7 as possible, wherein the difference in stroke length of the vertical and the horizontal hydraulic cylinders 15, 17 must not result in the shorter stroke being faster to reach its maximum displacement. Thus, internal cross section areas of the hydraulic cylinders are dimensioned so that a maximum stroke of each hydraulic cylinder 15, 17 takes an equal amount of time to achieve when the hydraulic cylinders 15, 17 are operated. Thereby it is always possible to modify certain variables to achieve a function where the horizontal and the vertical hydraulic cylinders 15, 17 arrive at their maximum strokes simultaneously.

The hydraulic system 19 comprises a second flow divider, arranged to regulate hydraulic fluid to be split equally between the at least one vertical hydraulic cylinder 17 and the first flow divider. The second flow divider will as stated be described in more detail with reference to fig. 2. However, to further expand on the previously described selectively dimensioned hydraulic cylinders 15, 17, the hydraulic system 19 of the vehicle according to fig. 1a and 1b may be perceived to comprise such a second flow divider, arranged to regulate hydraulic fluid to be split equally between the at least one vertical hydraulic cylinder 17 and the first flow divider. In this example the vehicle of figs. 1a and 1b is said to comprise two vertical cylinders 17, wherein the second flow divider will split the hydraulic fluid equally between the two pairs of cylinders 15, 17, that is, one pair of vertical cylinders 17 and one pair of horizontal cylinders 15. By means of dimensioning the internal cross sectional areas of the two pairs of cylinders 15, 17 in such a way that it compensates for the different stroke lengths of said pairs, it is thus possible to provide an operational function for the vehicle in which all four said cylinders 15, 17 reach their maximum stroke at the same time. Coupled with the linkage device 25 having a specific ratio between the incoming stroke length and the outgoing vertical displacement, all cylinders 15, 17 reaching their maximum stroke at the same time directly relates to the load carrying section 7 being lifted to the same height over its extension from the chassis 3. This in turn provides a reliable and precise movement of the load carrying section 7, which always will be horizontally aligned at a lower position (no or minimum stroke) and at an elevated position (maximum stroke).

The hydraulic system 19 may further comprise a third flow divider, arranged to split hydraulic fluid between two vertical hydraulic cylinders 17. However, this may not be needed to the same extent as the first flow divider as the load applied to the vertical cylinders 17 generally is known and less fluctuating, as such cylinders 17 are arranged between the chassis 3 and the load carrying section 7. The load applied to the load carrying section 7, which load more directly affects the hydraulic cylinders 15 arranged to the support wheels 9, may vary more in its positioning and size depending on the type of material handling operation being performed. Thus, the first flow divider will balance the operation of displacing the pistons of those cylinders 15 and hence be of more importance for the material handling vehicle 1.

By means of using the first and second flow dividers for distribution and regulation of hydraulic fluid as described above, the hydraulic cylinders 15, 17 of the hydraulic system 19 may be controlled in a very precise manner with regards to the stroke of said hydraulic cylinders 15, 17. Furthermore, such a hydraulic system 19 only needs one feed pump to manage all such cylinders 15, 17, which in turn provides a more compact and efficient design for the hydraulic system 19. By designing the hydraulic system 19 in a compact manner, the overall material handling vehicle 1 may also be assembled in a more compact manner, as unnecessary components for control and operation of the hydraulic cylinders 15, 17 may be left out of the design.

Fig. 2 shows a hydraulic flow schematic of a vehicle according to an embodiment. The flow schematic exhibit how the hydraulic circuit 21 and the hydraulic components are connected to each other within the hydraulic system 19. Herein it is seen that the first flow divider 35 is coupled to the hydraulic cylinders 15 which are connected to the support wheels (which are not shown). An incoming flow of hydraulic fluid is thus divided equally between said two cylinders 15 by means of the first flow divider 35, which provides an equal and synchronized lift of the end portion of the load carrying section. The second flow divider 37 is also seen, and it is illustrated that an incoming flow provided to the second flow divider 37 is split equally between a first outlet 39 which is regulated to a pair of vertical hydraulic cylinders 17, and a second outlet 41 which provides the first flow divider 35 with its incoming flow of hydraulic fluid. Herein the flow of hydraulic fluid may be perceived to be split in an equal 50/50 split twice by means of the first and second flow dividers 35, 37. The two pairs of hydraulic cylinders 15, 17 are then dimensioned internally, as described previously, so that such a distribution of hydraulic fluid leads to the pistons of all hydraulic cylinders 15, 17 to reach their maximum (and minimum) stroke at the same time when operated. Thereby only one feed pump 43 arranged in the hydraulic circuit 21 may control the stroke of the herein four hydraulic cylinders 15, 17 simultaneously. In general, different ratios of flow splits may also be used, if for example the cylinders of a pair are designed to not have an equal internal cross section area. For such cases, the split may be arranged to correspond to such a difference in cross sectional area so as to provide the same synchronized end result with regards to the stroke of the pistons of the hydraulic cylinders 15, 17. As should be obvious, the hydraulic system 19 as disclosed may be modified in various ways by means of modifying individual components and their design parameters to achieve a wide variety of design options for the hydraulic system 19.

The hydraulic system 19 further comprises additional components such as filters 45, non-return valves 47, a restrictor valve 49, a flow control 51 for example. Such additional components may however be perceived as components known in the arts with regards to how a general hydraulic system is designed and functions.

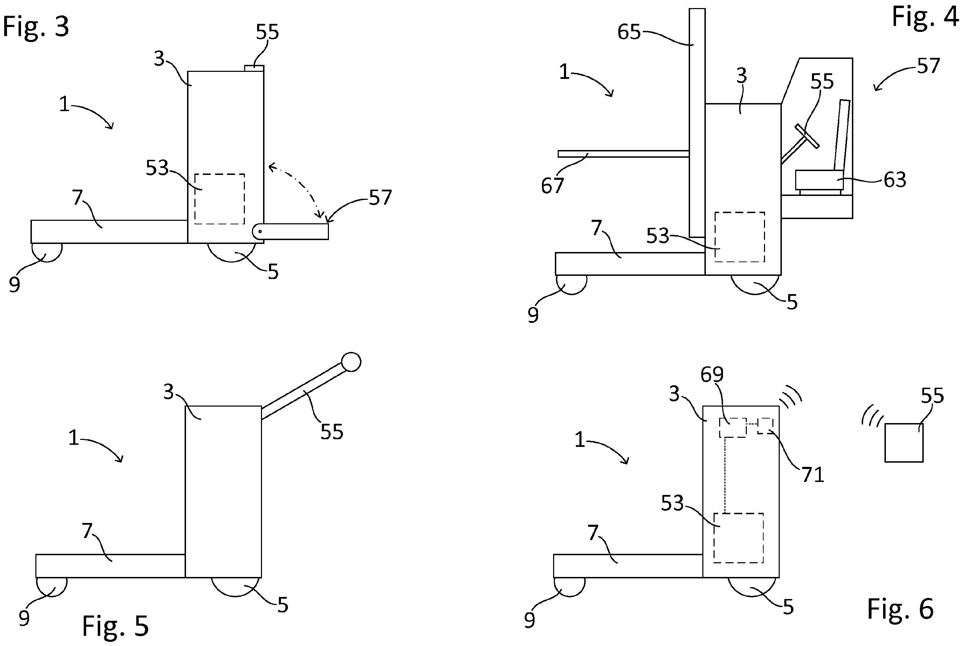

With reference to figs. 3 - 6, a plurality of additional features and possible modifications of the material handling vehicle 1 and its usages will be briefly explained. It should be realized that the different schematic embodiments of the material vehicle 1 depicted in said figures are to be viewed as variations of a material handling vehicle 1 comprising the same, or similar, primary features and functions as described with reference to figs. 1 - 2, wherein additional modifications are added to said vehicles 1. All material handling vehicles 1 as depicted in figs. 3 -6 may thus be perceived as similar to the vehicle 1 with reference to figs. 1a and 1b with regards to comprising a chassis 3 and a vertically movable load carrying section 7. Furthermore, all material handling vehicles 1 as depicted in figs. 3 -6 may also be perceived to comprise an internal hydraulic system 19 having a hydraulic flow schematic similar to that depicted in fig. 2.

Fig. 3 shows a vehicle 1 in a schematic side view according to an embodiment. The vehicle 1 depicted herein may further comprise a drive motor 53 arranged in the chassis 3, which drive motor 53 is operationally controllable by means of the user interface 55. The drive motor 53 may be arranged to drive the steerable wheel 5 of the vehicle 1 so as to provide a motor operated and controllable manoeuvrability to the vehicle 1. The vehicle 1 according to fig. 3 may further comprise an operator compartment 57. The operator compartment 57 as depicted herein is a pivotable platform 59, arranged to the chassis 3 at a pivot axis 61. Said platform 59 may thus be pivoted down to a horizontal position (as shown in fig.3), in which position an operator may stand thereon to drive around with the vehicle 1 when used. The platform 59 may also be pivoted about the pivot axis 61 to be folded towards the chassis 3 so as to save space when not used. The user interface 55 according to this embodiment is arranged in the form of a control panel at a top surface 53 of the chassis 3, wherein the user interface 55 is positioned at a location of the vehicle 1 that is easy to reach and use when standing on the platform 59. Generally, the operator compartment 57 may have alternative embodiments as well. For example, the operator compartment 57 may be arranged in the form of a cabin-like structure (which will be shown and described with reference to fig. 4).

Fig. 4 shows a vehicle in a schematic side view according to an embodiment. The vehicle according to this embodiment also comprises a drive motor, which drives the steerable wheel and is controlled by the user interface similar to the embodiment of fig. 3. This embodiment also comprises an operator compartment 57, but in the form of a cabin-like structure as briefly mentioned previously. The operator compartment 57 according to this embodiment comprises an operator seat 63 arranged in the cabin-like structure, and the user interface 55 is herein comprised within said cabin-like structure in the form of a steerable wheel or similar.

The embodiment of fig. 4 further comprises a mast 65 coupled to a vertically moveable load carrier 67, which protrudes from the mast 65 and extends parallel above the load carrying section 7, wherein the user interface 55 further comprises control means for operational control of the load carrier 67. Thereby the vehicle 1 according to fig. 4 may handle a plurality of loads simultaneously by means of providing operational control over both the load carrying section 7 and the additional load carrier 67, which both are selectively operational in a vertical direction. The additional load carrier 67 may be hydraulically operated as well, wherein the hydraulics relating to the load carrier 67 may or may not be incorporated in the hydraulic system for the load carrying section 7. As should be obvious however, the load carrying section 7 and the load carrier 67 may be operated individually and are not restricted to a synchronized operation even if they are coupled together in a shared hydraulic system.

Fig. 5 shows a vehicle 1 in a schematic side view according to an embodiment. The vehicle 1 according to this embodiment is a pedestrian controllable tiller truck, wherein the user interface 55 is a handle protruding from the chassis 3.

Fig. 6 shows a vehicle 1 in a schematic side view according to an embodiment. The user interface 55 according to this embodiment may be a remote control for controlling the vehicle 1. The vehicle 1 may further comprise a drive motor 53, which drives and operates the steerable wheel 5, similar to the embodiments depicted in fig. 3 and fig. 4. Even further, the vehicle 1 may comprise a control unit 69 and a wireless interface 71 for communication with the external user interface 55 in the form of a remote control. The remote control may be part of an externally positioned control panel, which may be used for controlling a plurality of material handling vehicles 1, or it may be an individual transportable remote control for controlling of an individual material handling vehicle 1.

It should be noted that the features illustrated with reference to figs. 3 - 6 are not to be viewed as restricted to the specific combinations thereof as shown in said figures. These additional features may be combined in a plurality of ways which should be obvious for a person skilled in the arts.

The foregoing description of the embodiments has been furnished for illustrative and descriptive purposes. It is not intended to be exhaustive, or to limit the embodiments to the variations described. Many modifications and variations will obviously be apparent to one skilled in the art. The embodiments have been chosen and described in order to best explicate principles and practical applications, and to thereby enable one skilled in the arts to understand the invention in terms of its various embodiments and with the various modifications that are applicable to its intended use.

## Claims

1. Material handling vehicle (1) comprising:
a chassis (3), having at least one steerable wheel (5) arranged thereto, configured to control movement of the vehicle (1),
a load carrying section (7), protruding horizontally from the chassis (3) and having at least two support wheels (9) arranged at a lower surface (11) of an end portion (13) thereof,
each support wheel (9) being coupled to a hydraulic cylinder (15), arranged to displace the support wheels (9) vertically relative to the lower surface (11) of the load carrying section (7),
the chassis (3) and the load carrying section (7) being coupled to each other by means of at least one additional vertical hydraulic cylinder (17),
wherein the hydraulic cylinders (15, 17) are coupled to a hydraulic system (19) comprising a hydraulic circuit (21) for hydraulic fluid, wherein the load carrying section (7) is vertically moveable relative the chassis (3) by means of the hydraulic system (19), the vehicle (1) further comprising a user interface (55) arranged for controlling the steerable wheel (5) and the vertical movement of the load carrying section (7) relative to the chassis (3),
**characterized in that**
the two hydraulic cylinders (15) coupled to the at least two support wheels (9) are coupled to the hydraulic system (19) via a first flow divider (35) which regulates hydraulic fluid to be split equally between the said two hydraulic cylinders (15), and
that a second flow divider (37) is arranged to regulate hydraulic fluid to be split equally between the at least one vertical hydraulic cylinder (17) and the first flow divider (35).

2. The material handling vehicle (1) according to claim 1, wherein internal cross section areas of the hydraulic cylinders (15, 17) are dimensioned so that a maximum stroke of each hydraulic cylinder (15, 17) takes an equal amount of time to achieve when the hydraulic cylinders (15, 17) are operated.

3. The material handling (1) vehicle according to any of the preceding claims, wherein the two hydraulic cylinders (15) coupled to the at least two support wheels (9) are arranged in a horizontal plane, wherein an intermediate linkage device (25) is arranged between said cylinders (15) and their respective support wheels (9), said linkage device (25) being arranged to translate the stroke of the cylinders (15) to a vertical displacement of the support wheels (9).

4. The material handling vehicle (1) according to any of the preceding claims, wherein it comprises two vertical hydraulic cylinders (17) arranged between the chassis (3) and the load carrying section (7), said two vertical cylinders (17) being arranged at opposite longitudinal sides of the vehicle (1).

5. The material handling vehicle (1) according to any of the preceding claims, further comprising a mast (65) coupled to a vertically moveable load carrier (67) which protrudes from the mast (65) and extends parallel above the load carrying section (7), and wherein the user interface (55) further comprises control means for operational control of the load carrier (67).

6. The material handling vehicle (1) according to any of the preceding claims, wherein the vehicle (1) is a pedestrian controllable tiller truck, and wherein the user interface (55) is a handle protruding from the chassis (3).

7. The material handling vehicle (1) according to any claims 1 to 5, wherein the vehicle (1) further comprises a drive motor (53) arranged in the chassis (3), which drive motor (53) is operationally controllable by means of the user interface (55).

8. The material handling vehicle (1) according to claim 7, wherein the vehicle (1) further comprises an operator compartment (57).

9. The material handling vehicle (1) according to claim 7, wherein the user interface (55) is a remote control for controlling the vehicle (1).

## Patentansprüche

1. Materialhandhabungsfahrzeug (1), umfassend:
ein Fahrgestell (3), das mindestens ein daran angeordnetes lenkbares Rad (5) aufweist, das konfiguriert ist, um eine Bewegung des Fahrzeugs (1) zu steuern,
einen lasttragenden Abschnitt (7), der horizontal von dem Fahrgestell (3) vorsteht und mindestens zwei an einer unteren Fläche (11) eines Endabschnitts (13) davon angeordnete Stützräder (9) aufweist,
wobei jedes Stützrad (9) mit einem Hydraulikzylinder (15) gekoppelt ist, der angeordnet ist, um die Stützräder (9) vertikal relativ zu der unteren Fläche (11) des lasttragenden Abschnitts (7) zu verschieben, wobei
das Fahrgestell (3) und der lasttragende Abschnitt (7) mittels mindestens eines zusätzlichen vertikalen Hydraulikzylinders (17) miteinander gekoppelt sind,
wobei die Hydraulikzylinder (15, 17) mit einem Hydrauliksystem (19) gekoppelt sind, das einen Hydraulikkreis (21) für Hydraulikfluid umfasst, wobei der lasttragende Abschnitt (7) relativ zu dem Fahrgestell (3) mittels des Hydrauliksystems (19) vertikal bewegbar ist, das Fahrzeug (1) ferner eine Benutzerschnittstelle (55) umfasst, die zum Steuern des lenkbaren Rads (5) und der vertikalen Bewegung des lasttragenden Abschnitts (7) relativ zu dem Fahrgestell (3) angeordnet ist,
**dadurch gekennzeichnet, dass**
die beiden mit den mindestens zwei Stützrädern (9) gekoppelten Hydraulikzylinder (15) über einen ersten Strömungsteiler (35) mit dem Hydrauliksystem (19) gekoppelt sind, der Hydraulikfluid, das gleichmäßig zwischen den beiden Hydraulikzylindern (15) zu verteilen ist, reguliert, und dass ein zweiter Strömungsteiler (37) angeordnet ist, um Hydraulikfluid,
das gleichmäßig zwischen dem mindestens einen vertikalen Hydraulikzylinder (17) und dem ersten Strömungsteiler (35) zu verteilen ist, zu regulieren.

2. Materialhandhabungsfahrzeug (1) nach Anspruch 1, wobei die Innenquerschnittsflächen der Hydraulikzylinder (15, 17) so bemessen sind, dass für einen maximalen Hub jedes Hydraulikzylinders (15, 17) eine gleiche Zeitdauer verwendet wird, wenn die Hydraulikzylinder (15, 17) betrieben werden.

3. Materialhandhabungsfahrzeug (1) nach einem der vorhergehenden Ansprüche, wobei die beiden mit den mindestens zwei Stützrädern (9) gekoppelten Hydraulikzylinder (15) in einer horizontalen Ebene angeordnet sind, wobei eine Zwischenverbindungsvorrichtung (25) zwischen den Zylindern (15) und ihren jeweiligen Stützrädern (9) angeordnet ist, wobei die Verbindungsvorrichtung (25) angeordnet ist, um den Hub der Zylinder (15) in eine vertikale Verschiebung der Stützräder (9) zu übersetzen.

4. Materialhandhabungsfahrzeug (1) nach einem der vorhergehenden Ansprüche, wobei es zwei vertikale Hydraulikzylinder (17) umfasst, die zwischen dem Fahrgestell (3) und dem lasttragenden Abschnitt (7) angeordnet sind, wobei die beiden vertikalen Zylinder (17) an gegenüberliegenden Längsseiten des Fahrzeugs (1) angeordnet sind.

5. Materialhandhabungsfahrzeug (1) nach einem der vorhergehenden Ansprüche, ferner umfassend einen Mast (65), der mit einem vertikal beweglichen Lastträger (67) gekoppelt ist, der von dem Mast (65) vorsteht und sich parallel über dem lasttragenden Abschnitt (7) erstreckt, und wobei die Benutzerschnittstelle (55) ferner Steuermittel zur betriebsmäßigen Steuerung des Lastträgers (67) umfasst.

6. Materialhandhabungsfahrzeug (1) nach einem der vorhergehenden Ansprüche, wobei das Fahrzeug (1) ein von einem Fußgänger steuerbarer Tiller Truck ist, und wobei die Benutzerschnittstelle (55) ein Griff ist, der von dem Fahrgestell (3) vorsteht.

7. Materialhandhabungsfahrzeug (1) nach einem der Ansprüche 1 bis 5, wobei das Fahrzeug (1) ferner einen Antriebsmotor (53) umfasst, der in dem Fahrgestell (3) angeordnet ist, wobei der Antriebsmotor (53) mittels der Benutzerschnittstelle (55) betriebsmäßig steuerbar ist.

8. Materialhandhabungsfahrzeug (1) nach Anspruch 7, wobei das Fahrzeug (1) ferner ein Bedienerabteil (57) umfasst.

9. Materialhandhabungsfahrzeug (1) nach Anspruch 7, wobei die Benutzerschnittstelle (55) eine Fernsteuerung zum Steuern des Fahrzeugs (1) ist.

## Revendications

1. Véhicule de manutention de matériaux (1) comprenant :
un châssis (3), ayant au moins une roue orientable (5) y arrangée, configuré pour commander le mouvement du véhicule (1),
une section porteuse de charge (7), faisant saillie horizontalement depuis le châssis (3) et ayant au moins deux roues de support (9) disposées sur une surface inférieure (11) d'une partie d'extrémité (13) de celui-ci,
chaque roue de support (9) étant couplée à un cylindre hydraulique (15), agencé pour déplacer les roues de support (9) verticalement par rapport à la surface inférieure (11) de la section porteuse de charge (7),
le châssis (3) et la section porteuse (7) étant couplés l'un à l'autre au moyen d'au moins un cylindre hydraulique vertical supplémentaire (17),
dans lequel les cylindres hydrauliques (15, 17) sont couplés à un système hydraulique (19) comprenant un circuit hydraulique (21) pour un fluide hydraulique, dans lequel la section porteuse de charge (7) est mobile verticalement par rapport au châssis (3) au moyen du système hydraulique (19),
le véhicule (1) comprenant en outre une interface utilisateur (55) agencée pour commander la roue orientable (5) et le mouvement vertical de la section porteuse de charge (7) par rapport au châssis (3),
**caractérisé en ce que**
les deux cylindres hydrauliques (15) couplés aux au moins deux roues de support (9) sont couplées au système hydraulique (19) via un premier diviseur de débit (35) régulant le fluide hydraulique à répartir également entre lesdits deux cylindres hydrauliques (15), et qu'un deuxième diviseur de débit (37) est agencé pour réguler le fluide hydraulique à répartir également entre l'au moins un vérin hydraulique vertical (17) et le premier diviseur de débit (35).

2. Véhicule de manutention de matériaux (1) selon la revendication 1, dans lequel les sections transversales internes des cylindres hydrauliques (15, 17) sont dimensionnées de telle sorte qu'une course maximale de chaque cylindre hydraulique (15, 17) prend un temps égal pour atteindre le moment où les cylindres hydrauliques (15, 17) sont actionnés.

3. Véhicule de manutention de matériaux (1) selon l'une quelconque des revendications précédentes, dans lequel les deux cylindres hydrauliques (15) couplés aux au moins deux roues de support (9) sont disposés dans un plan horizontal, dans lequel un dispositif de liaison intermédiaire (25) est disposé entre lesdits cylindres (15) et leurs roues de support respectives (9), ledit dispositif de liaison (25) étant agencé pour traduire la course des cylindres (15) en un déplacement vertical des roues de support (9).

4. Véhicule de manutention de matériaux (1) selon l'une quelconque des revendications précédentes, dans lequel il comprend deux cylindres hydrauliques verticaux (17) disposés entre le châssis (3) et la section porteuse de charge (7), lesdits deux cylindres verticaux (17) étant disposés sur les côtés longitudinaux opposés du véhicule (1).

5. Véhicule de manutention de matériaux (1) selon l'une quelconque des revendications précédentes, comprenant en outre un mât (65) couplé à un porte-charge mobile verticalement (67) qui fait saillie du mât (65) et s'étend parallèlement au-dessus de la section porteuse de charge (7), et dans lequel l'interface utilisateur (55) comprend en outre des moyens de commande pour la commande opérationnelle du support de charge (67).

6. Véhicule de manutention de matériaux (1) selon l'une quelconque des revendications précédentes, dans lequel le véhicule (1) est un camion à timon commandé par un piéton, et dans lequel l'interface utilisateur (55) est une poignée faisant saillie du châssis (3).

7. Véhicule de manutention de matériaux (1) selon l'une quelconque des revendications 1 à 5, dans lequel le véhicule (1) comprend en outre un moteur d'entraînement (53) arrangé dans le châssis (3), ledit moteur d'entraînement (53) pouvant être commandé de manière opérationnelle au moyen du interface utilisateur (55).

8. Véhicule de manutention de matériaux (1) selon la revendication 7, dans lequel le véhicule (1) comprend en outre un compartiment opérateur (57).

9. Véhicule de manutention de matériaux (1) selon la revendication 7, dans lequel l'interface utilisateur (55) est une télécommande pour commander le véhicule (1).
